# EUROPÄISCHE PATENTANMELDUNG

(11) **EP 4 233 548 A1**
(43) Veröffentlichungstag der Anmeldung: **30.08.2023**
(21) Anmeldenummer: 22159061.5
(22) Anmeldetag: 28.02.2022
(51) Int. Cl.: A21B 5/02

(54) **BACKVORRICHTUNG UND VERFAHREN ZUM BETRIEB EINER BACKVORRICHTUNG**

(71) Anmelder: Bühler Food Equipment GmbH, 2100 Leobendorf (AT)
(72) Erfinder: Pöhn, Reinhard, 3511 Furth bei Göttweig (AT); Kugi, Andrea, 1200 Wien (AT); Steinbach, Johannes, 1220 Wien (AT); Schopf, Christoph, 3464 Goldgeben (AT); Bauer, Christian, 3426 Muckendorf an der Donau (AT); Jadachowski, Lukas, 1220 Wien (AT); Steinböck, Andreas, 3051 St. Christophen (AT)
(74) Vertreter: Puchberger & Partner Patentanwälte

(57) **Zusammenfassung**

Backvorrichtung und Verfahren zum Herstellen gebackener, bevorzugt essbarer, Produkte, wobei mehrere öffenbare und schließbare Backplattenvorrichtungen (1) vorgesehen sind, wobei die Backplattenvorrichtungen (1) jeweils zwei Backplatten (2,3) und eine zwischen den geschlossenen Backplatten (2,3) gebildete Backform für eine Backmasse aufweisen, wobei die Backplattenvorrichtungen (1) aneinandergereiht entlang einer Bewegungsrichtung (16) durch eine Backstrecke (4) befördert werden, wobei jede Backplattenvorrichtung (1) mehrere entlang ihrer Erstreckung angenommene Backplattenbereiche (7) aufweist, wobei eine Heizanordnung (15) mit mehreren im Verlauf der Backstrecke (4) angeordneten Heizelementen (5) vorgesehen ist, wobei die Heizanordnung (15) die Backplattenvorrichtungen (1) beim Durchlaufen der Backstrecke (4) zum Backen der Backmasse in der Backform beheizt,
und wobei die Steuerungseinrichtung (6) die Heizleistung für die jeweiligen Backplattenbereiche (7) der Backplattenvorrichtungen (1) individuell steuert oder regelt.

## Beschreibung

Die Erfindung betrifft eine Backvorrichtung und ein Verfahren gemäß den Oberbegriffen der unabhängigen Patentansprüche.

Backvorrichtungen zur industriellen Herstellung von Backprodukten, wie beispielsweise Flachwaffeln, Hohlwaffeln, Weichwaffeln, gerollten Tüten und dergleichen sind in unterschiedlichen Ausführungen bekannt und publiziert. Herkömmliche Backvorrichtungen weisen beispielsweise eine Vielzahl an auf- und zuklappbaren Backzangen auf, die entlang einer geschlossenen Umlaufbahn durch einen Ofen befördert werden. Im aufgeklappten Zustand wird ein Teig oder eine Backmasse in die Backzangen eingebracht. In weiterer Folge wird die Backzange geschlossen und durch einen beheizten Backraum befördert, sodass in der geschlossenen Backzange ein gebackener Formkörper, insbesondere ein Backprodukt, gebacken wird. In weiterer Folge wird die Backzange geöffnet und der Formkörper kann entnommen werden.

Bei der industriellen Herstellung von Backprodukten ist die Effizienz bei der Herstellung von großer Wichtigkeit. Neben wirtschaftlicher Effizienz sind insbesondere auch Energieeffizienz und Ressourceneffizienz maßgeblich. So ist es vorteilhaft, wenn die Backvorrichtungen bezüglich ihrer Haltbarkeit, bezüglich der Minimierung des Backausschusses aber auch bezüglich des Energieverbrauchs optimiert bzw. verbessert werden.

Herkömmliche Backmaschinen weisen ein Heizungssystem auf, das dahingehend optimiert ist, dass alle Backzangen im Wesentlichen dieselbe Temperatur aufweisen, sodass eine konstante Produktqualität erreicht wird - und dies, obwohl die einzelnen Produkte in einer Vielzahl von Backzangen hergestellt werden. Zu diesem Zweck sind meist großflächige Heizungen bzw. beheizte Backräume vorgesehen, die eine möglichst gleichmäßige Temperatur über alle im Backraum befindlichen Backzangen bewirken. Die Trägheit des Heizsystems wird bei herkömmlichen Backanlagen als vorteilhaft angesehen, da sie kurzfristige Schwankungen beim Energieeintrag und bei der Beheizung der Backzangen ausgleicht und die Temperatur über alle Backzangen im Wesentlichen gleichgehalten wird.

In der Praxis hat sich jedoch herausgestellt, dass diese herkömmlichen Heizsysteme in bestimmten Betriebsmodi nachteilig sein können. Muss die Backmaschine beispielsweise aufgrund eines Fehlers angehalten werden, so befinden sich einige Backzangen im heißen Backraum und einige Backzangen in einem kühleren Bereich. Dadurch kühlen manche Backzangen während der Behebung des Fehlers stärker aus als andere. Soll nun wieder zum Regelbackbetrieb übergegangen werden, so müssen die ausgekühlten Backzangen stärker aufgeheizt werden als jene, die sich im Backraum befanden. Durch die großflächigen, trägen Heizungen kann dies ein verhältnismäßig langwieriger Prozess sein, da die heißen Backplatten nicht überhitzt werden dürfen, aber die kühlen Backplatten so schnell wie möglich aufgeheizt werden sollen.

Dieses Beispiel veranschaulicht, dass in dynamischen Betriebsmodi und Heizphasen einer industriellen Backvorrichtung die konstante, träge Beheizung mehrerer Backzangen nachteilig sein kann.

Es besteht daher ein Zielkonflikt zwischen gleichmäßiger Beheizung des Backraums und effizienter Beheizung in dynamischen Betriebsphasen.

Aufgabe der Erfindung ist es nun, die Effizienz einer Backvorrichtung zu steigern und die Nachteile des Standes der Technik bzw. der eingangs genannten Backvorrichtungen zu überwinden.

Die erfindungsgemäße Aufgabe wird insbesondere durch die Merkmale der unabhängigen Patentansprüche gelöst.

Entgegen der vorherrschenden Fachmeinung kann durch eine dynamische, lokal abgegrenzte Beheizung der Backplattenvorrichtungen eine Verbesserung der Effizienz erzielt werden. Insbesondere kann dadurch der Energieverbrauch in der Aufheizphase verringert werden. Zudem kann die Produktqualität verbessert werden. Ein weiterer Vorteil kann sein, dass durch die vorgeschlagenen Maßnahmen der Bauteilschutz verbessert wird, wodurch die Lebensdauer der Vorrichtung verlängert wird.

Die Erfindung betrifft insbesondere eine Backvorrichtung zum Herstellen gebackener, bevorzugt essbarer, Produkte. Bevorzugt sind mehrere öffenbare und schließbare Backplattenvorrichtungen vorgesehen. Bevorzugt ist vorgesehen, dass die Backplattenvorrichtungen jeweils zwei Backplatten und eine zwischen den geschlossenen Backplatten gebildete Backform für eine Backmasse aufweisen.

Backplattenvorrichtungen im Sinne der Erfindung können beispielsweise Backzangen mit einer Oberplatte und einer Unterplatte zur Herstellung von Flachwaffelblättern oder Hohlwaffelblättern sein. Backplattenvorrichtungen im Sinne der Erfindung können gegebenenfalls auch mehrteilige Vorrichtungen sein, wie sie beispielsweise zur Herstellung von gegossenen und gebackenen Hohlkörpern verwendet werden. Diese mehrteiligen Vorrichtungen umfassen beispielsweise eine geteilte Unterplatte, in der eine Kavität vorgesehen ist und eine Oberplatte, die einen in die Kavität einführbaren Dorn umfasst.

Bevorzugt werden die Backplattenvorrichtungen aneinandergereiht entlang einer Bewegungsrichtung durch eine Backstrecke befördert. Bevorzugt ist eine Heizanordnung mit mindestens einem im Verlauf der Backstrecke angeordneten Heizelement vorgesehen. Bevorzugt ist vorgesehen, dass die Heizanordnung die Backplattenvorrichtungen beim Durchlaufen der Backstrecke zum Backen der Backmasse in der Backform beheizt. Bevorzugt weist die Heizanordnung eine Steuerungseinrichtung zum Steuern und/oder Regeln der an die Backplattenvorrichtungen abgegebenen Heizleistung auf. Bevorzugt ist vorgesehen, dass die Heizanordnung die Heizleistung für jede Backplattenvorrichtung individuell steuert oder regelt, sodass die Heizleistung für jede Backplattenvorrichtung individuell einstellbar und veränderbar ist.

Gegebenenfalls ist vorgesehen, dass die Backplattenvorrichtungen jeweils mehrere nebeneinander bzw. entlang der Backplatten angeordnete Backplattenbereiche aufweisen.

Gegebenenfalls ist vorgesehen, dass die Heizanordnung die Heizleistung für die Backplattenbereiche mindestens einer Backplattenvorrichtung oder aller Backplattenvorrichtungen individuell steuert oder regelt, sodass die Heizleistung für die Backplattenbereiche der Backplattenvorrichtungen individuell einstellbar und veränderbar sind. Gegebenenfalls ist vorgesehen, dass das Heizelement die vorbeifahrenden Backplattenvorrichtungen eine nach der anderen, insbesondere einzeln, beheizt.

Gegebenenfalls ist vorgesehen, dass die Heizanordnung mindestens ein Heizelement aufweist, das im Verlauf der Backstrecke angeordnet ist und jeweils nur einen Backplattenbereich einer Backplattenvorrichtung beheizt und insbesondere nicht die gesamte dem Heizelement zugewandte Seite der Backplattenvorrichtung. Die Backplattenbereiche sind somit bevorzugt kleiner als die dem jeweiligen Heizelement zugewandte Seite der Backplatte. Dadurch können ausgewählte Bereiche der Backplattenvorrichtungen individuell beheizt werden.

Gegebenenfalls ist vorgesehen, dass die Heizanordnung mehrere Heizelemente aufweist, die quer zur Bewegungsrichtung nebeneinander oder an unterschiedlichen Positionen angeordnet sind.

Gegebenenfalls ist vorgesehen, dass diese Heizelemente quer zur Bewegungsrichtung nebeneinander angeordnete Backplattenbereiche individuell beheizen.

Gegebenenfalls ist vorgesehen, dass die Heizanordnung mehrere Heizelemente aufweist, die entlang der Bewegungsrichtung nacheinander angeordnet sind.

Gegebenenfalls ist vorgesehen, dass diese Heizelemente entlang der Bewegungsrichtung nacheinander angeordnete Backplattenvorrichtungen und/oder Backplattenbereiche individuell beheizen.

Gegebenenfalls ist vorgesehen, dass die Steuerungseinrichtung mindestens einen Sensor umfasst, der Parameter des Backprozesses aufnimmt, und dessen Sensorsignal eine Eingangsgröße für die von der Steuerungseinrichtung durchgeführte Steuerung oder Regelung der Heizleistung ist. Die Steuerungseinrichtung kann zumindest teilweise durch die Maschinensteuerung der Backvorrichtung gebildet sein.

Gegebenenfalls ist vorgesehen, dass die vom Sensor aufgenommenen Parameter in der Steuerungseinrichtung der jeweiligen Backplattenvorrichtung oder dem jeweiligen Backplattenbereich zugeordnet sind.

Gegebenenfalls ist vorgesehen, dass einer oder mehrere der folgenden Parameter aufgenommen werden:
- Temperatur einer bestimmten Backplattenvorrichtung,
- Temperaturen mehrerer oder aller Backplattenvorrichtungen,
- Temperatur eines Backplattenbereichs einer bestimmten Backplattenvorrichtung (1),
- Temperaturen mehrerer oder aller Backplattenbereiche einer Backplattenvorrichtung,
- Temperaturen eines Backplattenbereichs oder mehrerer oder aller Backplattenbereiche mehrerer oder aller Backplattenvorrichtungen,
- Produktparameter von gebackenen Produkten, wie beispielsweise Restfeuchte nach dem Backen oder Bräunungsgrad nach dem Backen.

Die Verteilung des Bräunungsgrades bzw. die Restfeuchte kann oder können gegebenenfalls ortsaufgelöst auf den Produkten ermittelt werden. Dies geschieht beispielsweise über optische Verfahren im VIS bzw. NIR Bereich. Dies vereinfacht eine Regelung der Heizleistung einzelner Backplattenbereiche auf Basis der Produktparameter.

Insbesondere betrifft die Erfindung eine erfindungsgemäße Backvorrichtung umfassend einen Endlosförderer, der die Backplattenvorrichtungen aneinandergereiht kontinuierlich nacheinander:
- durch einen Backmassenauftragsbereich zum Einbringen einer Backmasse in die geöffneten Backplattenvorrichtungen,
- durch einen Schließbereich zum Schließen und gegebenenfalls Verriegeln der Backplattenvorrichtu ngen,
- durch einen von der Heizanordnung beheizten Backbereich zum Backen der in den Backplattenvorrichtungen angeordneten Backmasse entlang der Backstrecke,
- durch einen Öffenbereich zum Öffnen der Backplattenvorrichtungen,
- und durch einen Entnahmebereich zum Entnehmen der aus der Backmasse gebackenen Formkörper befördert.

Gegebenenfalls ist vorgesehen, dass das oder mindestens ein Heizelement ein Induktionsheizelement zur induktiven, insbesondere berührungslosen, Beheizung der Backplattenvorrichtungen und/oder deren Backplattenbereiche ist.

Insbesondere betrifft die Erfindung ein Verfahren zum Betrieb einer Backvorrichtung zum Herstellen gebackener, bevorzugt essbarer, Produkte.

Bevorzugt ist vorgesehen, dass mehrere öffenbare und schließbare Backplattenvorrichtungen aneinandergereiht entlang einer Bewegungsrichtung durch eine Backstrecke befördert werden,
- wobei die Backplattenvorrichtungen bevorzugt jeweils zwei Backplatten und eine zwischen den geschlossenen Backplatten gebildete Backform für eine Backmasse aufweisen,
- wobei eine Heizanordnung bevorzugt mit mindestens einem im Verlauf der Backstrecke angeordneten Heizelement vorgesehen ist,
- wobei die Heizanordnung die Backplattenvorrichtungen beim Durchlaufen der Backstrecke zum Backen der Backmasse in der Backform beheizt,
- wobei bevorzugt eine Steuerungseinrichtung der Heizanordnung die an die Backplattenvorrichtungen abgegebene Heizleistung steuert und/oder regelt.

Bevorzugt ist vorgesehen, dass die Heizanordnung die Heizleistung für jede Backplattenvorrichtung individuell steuert oder regelt, sodass die Heizleistung für jede Backplattenvorrichtung individuell einstellbar und veränderbar ist.

Gegebenenfalls ist vorgesehen, dass Parameter des Backprozesses aufgenommen werden, und bevorzugt, dass diese Parameter Eingangsgrößen für die von der Steuerungseinrichtung durchgeführte Steuerung oder Regelung der Heizleistung sind.

Gegebenenfalls ist vorgesehen, dass die aufgenommenen Parameter der jeweiligen Backplattenvorrichtung oder dem jeweiligen Backplattenbereich zugeordnet werden.

Bevorzugt ist vorgesehen, dass die Backvorrichtung zur Herstellung von Waffelprodukten geeignet und/oder eingerichtet ist. Gegebenenfalls ist vorgesehen, dass die Backvorrichtung zur Herstellung unter Überdruck ausgebackener, knusprig spröder Waffeln aus einer im ungebackenen Zustand 55 bis 70% Wasser enthaltenden Backmasse eingerichtet ist. Die Backform ist bei dieser Ausführungsform eine Überdruckbackform, die durch Schließen und Verriegeln der Backplattenvorrichtung gebildet wird. Insbesondere ist vorgesehen, dass die Backplattenvorrichtungen jeweils Dampfleisten und/oder Dichtleisten umfassen. Alternativ kann die Backvorrichtung auch eine Backmaschine zur industriellen Herstellung von im Wesentlichen drucklos gebackenen Waffelprodukten wie beispielsweise zuckerhaltige Waffeln oder Weichwaffeln sein

Bevorzugt ist vorgesehen, dass die Backplattenvorrichtungen kontinuierlich und/oder mit konstanter Geschwindigkeit durch die Backstrecke befördert werden. Bevorzugt ist vorgesehen, dass die Heizanordnung, insbesondere die Heizelemente, unbewegt bzw. ortsfest angeordnet sind. In diesem Fall bewegen sich die Backplattenvorrichtungen an dem Heizelement bzw. an den Heizelementen vorbei. Die Heizelemente können beispielsweise am Maschinengestell bzw. am Gehäuse der Backvorrichtung angebracht sein. Gegebenenfalls sind die Heizelemente in ihrer Lage einstellbar in der Backvorrichtung angebracht, sodass beispielsweise bei Induktionsheizelementen der Luftspalt eingestellt werden kann. Während des Normalbetriebs, also beispielsweise im Backbetrieb, während der Aufheiz- und Abkühlphase, bleiben die Heizelemente aber bevorzugt starr angeordnet.

Die Steuerung und/oder Regelung der Heizleistung erfolgt in allen Ausführungsformen bevorzugt durch die Zufuhr von mehr oder weniger Energie, also elektrischer Energie bei elektrischen bzw. induktiven Heizelementen oder Brennstoffenergie bei gasbetriebenen Heizelementen.

Bevorzugt umfasst die Backvorrichtung ein im Wesentlichen geschlossenes Gehäuse. Das Gehäuse hat bevorzugt eine langgestreckte Form. Das Gehäuse kann Öffnungen zur Zuführung diverser Arbeitsmedien und zur Ausgabe der gebackenen Produkte aufweisen.

Gegebenenfalls ist ein Vorkopf vorgesehen, in dem der Backmassenauftragsbereich, der Schließbereich, der Öffenbereich und der Entnahmebereich vorgesehen sind. Bevorzugt ist der Vorkopf durch eine Wand von dem Backraum abgetrennt, sodass im Vorkopf eine kleinere Temperatur herrscht als im Backraum. Gegebenenfalls kann diese Vorkopfwand jedoch auch entfallen, sodass die genannten Bereiche innerhalb des Backraums vorgesehen sind.

Bevorzugt ist vorgesehen, dass die Temperatur jeder einzelnen Backplattenvorrichtung bzw. jedes einzelnen Backplattenbereichs individuell gesteuert oder geregelt werden kann. Insbesondere wird die Heizleistung der Heizelemente individuell gesteuert oder geregelt. Da die Backplattenbereiche bevorzugt Bereiche ein und derselben Backplatte sein können, geschieht eine Wärmeleitung von einem Bereich zum angrenzenden Bereich. Dadurch kann keine vollständig individuelle und unabhängige Einstellung der Temperaturen in diesen Bereichen erfolgen. Jedoch kann die Heizleistung für jeden dieser Backplattenbereiche im Rahmen der Möglichkeiten der Heizanordnung individuell eingestellt werden.

Die Heizelemente sind bevorzugt derart ausgestaltet, dass die Heizleistung ausreichend rasch und dynamisch verändert werden kann. Dies kann beispielsweise über induktiv wirkende Heizelemente erfolgen, deren Heizleistungen durch eine einfache Leistungssteuerung bzw. Leistungsregelung rasch und flexibel angepasst werden kann. Jedoch können grundsätzlich auch andere Heizelemente verwendet werden, solange sie einen ausreichend kleinen Heizbereich und ein ausreichend dynamisches Ansprechverhalten für die individuelle Beheizung der Backplattenvorrichtungen bzw. deren Backplattenbereiche haben.

Bevorzugt ist mindestens ein Sensor vorgesehen, der Parameter des Backprozesses aufnimmt, wobei das Sensorsignal zur Steuerung bzw. Regelung der Heizleistung verwendet wird. Der Sensor kann beispielsweise ein pyrometrischer Temperatursensor sein, der Temperaturmessungen an den Backplattenoberflächen, also insbesondere an den backformseitigen Oberflächen oder an den Rückseiten der Backplatten bzw. der Backplattenvorrichtungen vornimmt. Bevorzugt kann der Sensor oder mehrere Sensoren die Temperaturen der einzelnen Backplattenbereiche aufnehmen und ein Messsignal zur Steuerung und/oder Regelung der Heizleistung der Heizelemente an die Steuerungseinrichtung weiterleiten. Bevorzugt erfolgt die Messung an den beheizten Rückseiten bzw. an Positionen, die auch nach Verschluss der Backplattenvorrichtungen pyrometrisch messbar sind. Eine backformseitige Messung der Temperatur wäre beispielsweise zwischen der Entnahme des Backproduktes und dem Aufguss des Teiges bzw. zwischen der Entnahme des Waffelblattes und Verschließen der Backform möglich. Eine backformseitige Messung der Temperatur wäre gegebenenfalls im Entnahmebereich, im Teigauftragsbereich und dazwischen bzw. im Entnahmebereich, im Schließbereich und dazwischen möglich.

Gegebenenfalls kann auch ein Sensor vorgesehen sein, der Parameter des erzeugten Produktes bzw. der erzeugten Produkte aufnimmt. Ein derartiger Sensor kann beispielsweise ein optischer Sensor sein, der den Bräunungsgrad des gebackenen Produkts bei der Entnahme aufnimmt. Der Sensor kann beispielsweise auch eine Messeinrichtung zur Bestimmung der Restfeuchte bzw. des Gewichts der Produkte sein oder umfassen.

In allen Ausführungsformen ist bevorzugt vorgesehen, dass die durch den Sensor aufgenommenen Parameter oder daraus berechnete Parameter den einzelnen Backplattenvorrichtungen und/oder den Backplattenbereichen zugeordnet bzw. zugewiesen werden. Insbesondere diese Zuordnung erlaubt die individuelle Regelung oder Steuerung der Heizleistung für jede Backplattenvorrichtung oder jeden Backplattenbereich.

Gegebenenfalls ist vorgesehen, dass die Backstrecke entlang einer oberen Transportebene verläuft. Gegebenenfalls ist vorgesehen, dass die Backstrecke von einer oberen Transportebene über einen Umlenkpunkt zu einer unteren Transportebene verläuft.

Gegebenenfalls ist vorgesehen, dass die Heizelemente oberhalb der Backstrecke angeordnet sind. Gegebenenfalls ist vorgesehen, dass die Heizelemente unterhalb der Backstrecke vorgesehen sind. Gegebenenfalls ist vorgesehen, dass die Heizelemente beidseitig, insbesondere oberhalb und unterhalb der Backstrecke vorgesehen sind. Gegebenenfalls ist vorgesehen, dass entlang der oberen und der unteren Transportebene jeweils Heizelemente vorgesehen sind, wobei diese Heizelemente oberhalb, unterhalb oder auf beiden Seiten der Transportebenen angeordnet sein können. Insbesondere ist vorgesehen, dass im Verlauf der Backstrecke jeweils beide Platten der Backplattenvorrichtungen von der Heizanordnung beheizt werden.

Durch die beschriebene Backvorrichtung und das beschriebene Verfahren können insbesondere folgende Vorteile erzielt werden:
- Zeitoptimiertes Erreichen der Soll-Temperatur ohne Überschwingen in der Aufheizphase.
- Temperaturführung über Trajektorien, sodass die Temperaturen von oberer und unterer Backplatte eng beieinander gehalten werden, um irreversible mechanische Verformungen zu vermeiden.
- Temperaturführung über alle Backplatten hinweg mit möglichst geringer Temperaturabweichung untereinander.
- Im normalen Backbetrieb kann ein rascher Ausgleich von Temperaturunterschieden zwischen den Backplatten erzielt werden, um einen möglichst konstanten Backprozess sicherzustellen.
- Es kann besonders rasch auf das Starten und Stoppen des Aufgusses der Backmasse im Auftragsbereich reagiert werden.
- Zudem kann die Aufgussmenge und auch beispielsweise der Wasseranteil der Backmasse berücksichtigt werden, um damit kurze Ausregelzeiten und kleine Temperaturabweichungen zur Soll-Temperatur zu erzielen.
- Auch ein unterschiedlicher Energiebedarf, bedingt durch verschiedene mechanische Einstellungen, wie beispielsweise unterschiedliche Waffelblattdicken, kann durch die Backvorrichtung und das Verfahren einfach ausgeglichen werden.
- Es besteht auch die Möglichkeit, unterschiedliche Backformen in der Backvorrichtung vorzusehen, da eine individuelle Beheizung aufgrund unterschiedlicher Gravuren, Teigmengen, Teigrezepten etc. durch die erfindungsgemäße Backvorrichtung bzw. das Verfahren vorgenommen werden kann.
- Zudem wird bevorzugt eine direkte Regelung einer Produktqualitätsgröße wie beispielsweise Bräunungsgrad, Restfeuchte oder Gewicht ermöglicht.

In vorteilhafter Weise kann die Backvorrichtung bzw. das Verfahren eine effiziente Aufheizphase der Backvorrichtung durchführen. So können gezielt jene Backplattenvorrichtungen oder Backplattenbereiche individuell mit einer angepassten Heizleistung beheizt werden, um so rasch wie möglich die Soll-Temperatur zu erreichen, ohne dabei jedoch jene Backplatten oder Bereiche zu überheizen, die bereits die Soll-Temperatur aufweisen. Insbesondere können durch die individuelle Beheizung von Backplattenbereiche während der Aufheizphase auch Wärmespannungen innerhalb einer Backplatte aber auch Wärmespannungen unterschiedlicher Komponenten einer Backplattenvorrichtung reduziert werden. Bevorzugt können Komponenten der Backplattenvorrichtungen wie beispielsweise ein Scharnier, ein Verschluss, ein Rahmen, Sensoren etc. gezielt individuell weniger beheizt werden, um diese Bauteile zu schützen oder sie auf einer gewünschten Temperatur zu halten.

Bevorzugt können auch die Temperaturunterschiede zwischen Oberplatte und Unterplatte einer Backplattenvorrichtung reduziert bzw. so klein wie möglich gehalten werden. Dies kann einerseits durch die individuelle Steuerung und/oder Regelung der Heizleistung erfolgen. Zusätzlich können entlang der Backstrecke jedoch auch beidseitig der Backplattenvorrichtungen, also im selben Bereich oben und unten, Heizelemente vorgesehen sein, um die Oberplatte und die Unterplatte einer Backplattenvorrichtung gleichzeitig beheizen zu können.

Im Backbetrieb beispielsweise kann jener Backplattenbereich mit einer höheren Heizleistung beheizt werden, in dem der Teigaufguss erfolgt. Der Teigaufguss kühlt die Backplatten ab, womit in diesem Bereich eine höhere Heizleistung vorteilhaft ist. Dies kann durch die individuelle Steuerung bzw. Regelung erfolgen, ohne dass weniger abgekühlte Bereiche durch die Heizelemente überhitzt werden.

Zudem kann eine individuelle Beheizung von Bereichen oder Backplattenvorrichtungen auch dann erfolgen, wenn einzelne Backplatten ohne Teigaufguss durch die Backmaschine befördert werden. Dadurch kann der Output der Backvorrichtung in 1-Backplattenvorrichtungs-Inkrementen, also im Wesentlichen stufenlos variiert werden. Insbesondere kann die Anzahl der pro Zeit hergestellten Backprodukte dadurch variiert werden, dass nicht alle sondern eine beliebige Anzahl an Backplattenvorrichtungen mit einer Backmasse versehen bzw. beschickt werden. Die Steuerungseinrichtung passt dann die benötigte Heizleistung für jede Backplattenvorrichtung an.

Es ist auch möglich, durch die Backvorrichtung und das Verfahren unterschiedliche Backplattenvorrichtungen zur Herstellung unterschiedlich geformter Produkte zu verwenden, da die Heizleistung für jede Backplattenvorrichtung individuell angepasst werden kann. So benötigen beispielsweise Backformen mit größerem Backmassenvolumen in der Regel eine größere Heizleistung als Backformen mit kleinerem Volumen.

Überdies kann jede Backplattenvorrichtung bzw. jeder Backplattenbereich gegebenenfalls mit einem individuellen zeitlichen Temperaturverlauf beheizt werden.

Gemäß einer bevorzugten Ausführungsform kann für jede Backplatte bzw. für jede Backplattenvorrichtung während des Backprozesses ein bestimmtes Temperaturprofil, also ein individuell einstellbarer zeitlicher Temperaturverlauf, abgefahren werden, um Produkteigenschaften wie beispielsweise die Sprödheit oder andere Konsistenzparameter gezielt zu beeinflussen. Beispielsweise im Verlauf der Backstrecke eine langsame Aufheizung erfolgen, wenn bei hintereinander geschalteten Heizelementen das erste Heizelement eine kleinere Heizleistung abgibt als das darauffolgende. Alternativ kann eine rasche Aufheizung erfolgen, indem bereits das erste oder ein vorderes Heizelement eine hohe Heizleistung an die Backplattenvorrichtung abgibt.

In der Aufheiz- und/oder Abkühlphase kann eine Temperaturführung über Trajektorien erfolgen, sodass die Temperaturen von oberer und unterer Backplatte einer Backplattenvorrichtung bei der Temperaturänderung im Wesentlichen gleich sind, um Verformungen zu vermeiden. Zudem kann gegebenenfalls eine Temperaturführung über alle Backplatten hinweg mit geringstmöglicher Temperaturabweichung untereinander erfolgen.

Gegebenenfalls können die Backvorrichtung und das Verfahren auch zur Überwachung des Backprozesses verwendet werden. Für eine modellbasierte Regelung ist es gegebenenfalls notwendig, Zustandsschätzungen durchzuführen, wie beispielsweise die Schätzung der Emissionsgrade von Backplattenrückseiten. Mit diesen Schätzungen und im Vergleich zum eingestellten Emissionsgrad beim Temperaturfühler können Schwankungen der Oberflächenbeschaffenheit der Backplatten - beispielsweise durch Verschmutzung, Korrosion oder manuelle Änderung - erkannt und für eine Diagnose herangezogen werden.

Bevorzugt ist vorgesehen, dass backplattenindividuelle Größen wie beispielsweise Backplattentemperaturen bzw. Temperaturen der Backplattenbereiche gesteuert oder geregelt werden. Gegebenenfalls ist vorgesehen, dass der oder die Sensoren derart ausgebildet sind, dass aus ihren Messwerten entsprechende Größen wie beispielsweise die Temperaturen errechnet werden können.

Bevorzugt ist vorgesehen, dass die Heizelemente oder das Heizelement derart ausgestaltet ist oder sind, dass die Backplatten der Backplattenvorrichtungen oder deren Backplattenbereiche mit unterschiedlichen bzw. wählbaren Heizleistungen versorgt werden können. Insbesondere soll der Heizbereich des Heizelements ausreichend klein sein und auf Änderungen der Soll-Größe hinreichend schnell reagieren.

Bevorzugt ist in allen Ausführungsformen vorgesehen, dass der Heizbereich eines Heizelements kleiner ist als eine Backplatte, insbesondere kleiner ist als die dem Heizelement zugewandte Seite einer Backplatte. Bevorzugt ist vorgesehen, dass der Heizbereich eines Heizelements kleiner ist als die Erstreckung der Backplattenvorrichtung, sodass ein Backplattenbereich individuell beheizt werden kann.

Bevorzugt ist in allen Ausführungsformen vorgesehen, dass das beschriebene Verfahren auf der beschriebenen Backvorrichtung ausgeführt wird. Bevorzugt ist in allen Ausführungsformen vorgesehen, dass die beschriebene Backvorrichtung zur Ausführung des beschriebenen Verfahrens eingerichtet ist.

Bevorzugt ist vorgesehen, dass die Backplattenvorrichtungen eine nach der anderen, insbesondere aneinandergereiht, entlang einer Bewegungsrichtung durch eine Backstrecke befördert werden. Entlang der Backstrecke ist eine Heizanordnung zur Beheizung der Backplattenvorrichtungen vorgesehen, die in einer bevorzugten Ausführungsform mehrere Heizelemente umfasst.

Sind die Heizelemente entlang der Bewegungsrichtung der Backplattenvorrichtungen hintereinander angeordnet, so werden die Backplattenvorrichtungen nacheinander von den Heizelementen beheizt. Betrachtet man hierbei eine Backplattenvorrichtung, so kommt diese in den Heizbereich eines Heizelements und zu einem späteren Zeitpunkt oder anschließend im weiteren Verlauf der Bewegung der Backplattenvorrichtung, in den Heizbereich eines weiteren Heizelements.

Je nach Abstand der Backplattenvorrichtungen und der Heizelemente kann hierbei vorgesehen sein, dass während die eine Backplattenvorrichtung von dem weiteren Heizelement beheizt wird, das vorherige Heizelement eine andere Backplattenvorrichtung beheizt.

Bevorzugt ist vorgesehen, dass die einzelnen Heizelemente der Heizanordnung über die gesamte Backstrecke verteilt angeordnet sind. Gegebenenfalls sind die Heizelemente regelmäßig oder unregelmäßig entlang der Backstrecke verteilt angeordnet. Bevorzugt ist die Heizleistung jener Heizelemente, die am Anfang der Backstrecke angeordnet sind, größer als die Heizleistung der darauf folgenden Heizelemente.

Um nun eine individuelle Beheizung der Backplattenvorrichtungen zu ermöglichen, werden die einzelnen Backplattenvorrichtungen bevorzugt von der Steuerungseinrichtung identifiziert. Diese Identifikation kann beispielsweise durch einen Sensor erfolgen, der ein individuelles Signal einer Backplatte aufnimmt und dadurch die Backplatte identifiziert. Alternativ kann dies auch dadurch erfolgen, dass über ein Signal der Bewegungsgeschwindigkeit der Backplattenvorrichtungen die Lage der einzelnen Vorrichtungen ermittelt bzw. errechnet werden kann. Bewegt sich nun eine Backplattenvorrichtung entlang der Heizstrecke, so wird diese Backplattenvorrichtung von den Heizelementen individuell beheizt und die Heizleistung der einzelnen Heizelemente wird für diese Backplattenvorrichtung speziell angepasst. Diese Anpassung geschieht natürlich nur, wenn eine Anpassung nötig ist. Ebenso kann die Heizleistung der Heizelemente für die anderen Backplattenvorrichtungen individuell angepasst werden.

Zusätzlich oder alternativ ist es gemäß der vorliegenden Vorrichtung und des Verfahrens möglich, dass quer zur Bewegungsrichtung der Backplattenvorrichtungen mehrere Heizelemente vorgesehen sind. Diese sind dazu eingerichtet und/oder geeignet, Backplattenbereiche der Backplattenvorrichtungen individuell zu beheizen. So kann beispielsweise ein seitlicher Streifen einer Backplattenvorrichtung mit einer anderen Heizleistung beheizt werden als ein mittiger Streifen. Gegebenenfalls kann auch nur ein seitlicher Streifen oder nur ein mittiger Streifen beheizt werden.

Gegebenenfalls kann vorgesehen sein, dass entlang an den Backplattenvorrichtungen jeweils auch in Bewegungsrichtung mehrere Backplattenbereiche definiert sind. So kann beispielsweise die entlang der Bewegungsrichtung gesehene vordere Kante einer Backplatte bzw. einer Backplattenvorrichtung mit einer anderen Heizleistung beheizt werden als der Mittenbereich oder die entlang der Bewegungsrichtung gesehen hintere Kante der Backplattenvorrichtung. Bevorzugt ist vorgesehen, dass die Heizleistung für die Backplattenbereiche aller Backplattenvorrichtungen individuell gesteuert oder geregelt werden können. Die Backplattenbereiche sind insbesondere aneinander angrenzend angeordnete Bereiche entlang der Rückenflächen der Backplattenvorrichtungen bzw. der Backplatten.

Bevorzugt werden die Backplattenbereiche identifiziert und individuell beheizt. Die individuelle Beheizung kann auch dadurch erfolgen, dass über die Geschwindigkeit der Backplattenvorrichtungen entlang der Bewegungsrichtung und über ein Zeitsignal die Lage der jeweiligen Backplattenbereiche entlang der Backstrecke bestimmt wird. Über die Steuerungseinrichtung kann dann eine individuelle Beheizung dieser Backplattenbereiche erfolgen.

Die Heizelemente werden somit über die Zeit derart gesteuert oder geregelt, dass die Heizleistung verändert oder auch gleich gehalten wird. Diese zeitliche Steuerung und/oder Regelung der Heizleistung der einzelnen Heizelemente wird insbesondere mit der Bewegung der Backplattenvorrichtungen synchronisiert, sodass die Heizelemente die Backplattenvorrichtungen bzw. die Backplattenbereiche gezielt und individuell beheizen können.

Die Wahl der Heizleistung kann dabei durch eine einfache individuelle Steuerung für jede Backplattenvorrichtung oder für jeden Backplattenbereich erfolgen. Beispielsweise kann eine Bedienperson eine individuelle Einstellung für jede Backplattenvorrichtung oder jeden Backplattenbereich vornehmen. Bevorzugt ist jedoch ein Sensor vorgesehen, der einen Parameter aufnimmt, der eine automatische Steuerung und/oder Regelung durch die Steuerungseinrichtung ermöglicht. Insbesondere in dynamischen Heizphasen, wie beispielsweise in der Aufheizphase, in der Abkühlphase oder beim Start des Backmassenaufgusses, ist es vorteilhaft, Sensordaten zur Regelung der Heizleistung für jede Backplattenvorrichtung oder für jeden Backplattenbereich vorzunehmen.

Bevorzugt ist vorgesehen, dass zur Regelung in der Steuerungseinrichtung ein mathematisches Modell hinterlegt ist, das mittels Zustandsregelung die Inhomogenität aktiv ausgleicht und insbesondere einfach auf unterschiedliche Ofentypen bzw. ähnliche Ofentypen übertragen werden kann.

Gegebenenfalls ist vorgesehen, dass durch lineare Näherung, Abtastung und/oder Zustandstransformation das zugrundeliegende mathematische Modell in eine lineare, zeitinvariante (LTI-) Form überführt werden kann. Gegebenenfalls wird eine Kombination eines Kalman-Filters mit einem LQR-Regler eingesetzt.

Zur Verbesserung der Regelung der Backvorrichtung wird bevorzugt ein Modell hinterlegt, das einer vereinfachten mathematischen Abbildung der Backvorrichtung entspricht. Insbesondere werden in diesem Modell die Wärmeströme bzw. die Wärmebilanzen der einzelnen Backplattenvorrichtungen bzw. der einzelnen Backplatten berücksichtigt, also z.B. die durch die Heizanordnung eingebrachte Wärmemenge, die durch die Backmasse aufgenommene Wärmemenge, Wärmeverluste durch Strahlung, Wärmeleitung zu benachbarten Backplattenbereichen oder Backplattenvorrichtungen etc. Das Modell kann durch Sensordaten eines Sensors angeglichen bzw. angepasst werden.

Bevorzugt ist in allen Ausführungsformen vorgesehen, dass die Heizleistung des mindestens einen Heizelements oder aller Heizelemente online geregelt wird. Insbesondere sind mehrere Heizelemente vorgesehen, die jeweils unabhängig voneinander geregelt werden.

Bevorzugt umfasst die oder jede Backplatte bzw. Backplattenvorrichtung mehrere Backplattenbereiche, die nebeneinander bzw. aneinander angrenzend an der Backplatte angenommen werden. Insbesondere werden entlang der Erstreckung der Backplattenvorrichtungen Backplattenbereiche angenommen. Diese Bereiche können beispielsweise über die gesamte äußere Oberfläche der jeweiligen Backplattenvorrichtung verteilt angeordnet sein und neben den Rückenflächen der Backplatten auch an weiteren Komponenten der Backplattenvorrichtungen, beispielsweise en einem Scharnier, einem Rahmenteil, einem Verschluss oder an ähnliche Komponenten angenommen werden.

Bei den Backplattenbereichen handelt es sich um Bereiche der Backplattenvorrichtungen, die von den Heizelementen individuell beheizt werden können. Gegebenenfalls überschneiden die Backplattenbereiche einander. Gegebenenfalls sind sie nebeneinander angeordnet. Gegebenenfalls sind die Backplattenbereiche beabstandet voneinander angeordnet.

Bevorzugt sind die Backplattenbereiche an jenen Seiten der Backplattenvorrichtungen angenommen, die den Heizelementen zugewandt sind.

Bevorzugt ist in allen Ausführungsformen vorgesehen, dass sich die Backplattenbereiche nur über einen Teil der den Heizelementen zugewandten Fläche der Backplattenvorrichtungen erstrecken. Beispielsweise ist es jeweils ein Teil der Rückenfläche einer der Backplatten einer Backplattenvorrichtung. In allen Ausführungsformen ist bevorzugt vorgesehen, dass die Backplattenvorrichtungen jeweils mindestens zwei Seiten aufweisen. Bevorzugt sind diese Seiten die Rückenflächen der beiden Backplatten. An jeder dieser Seiten sind bevorzugt mehrere Backplattenbereiche angenommen, die individuell beheizt werden können.

In allen Ausführungsformen ist bevorzugt vorgesehen, dass mehr als zwei Backplattenbereiche an einer Backplattenvorrichtung vorgesehen sind. Insbesondere sind vier oder mehr Backplattenbereiche vorgesehen, wobei bevorzugt an jeder Seite zumindest zwei Backplattenbereiche angenommen werden.

Beispielsweise werden eine bis vier Backplattenbereiche entlang der Bewegungsrichtung der Backplatten definiert. Beispielsweise werden ein bis neun Backplattenbereiche quer zur Bewegungsrichtung der Backplatten definiert. Beispielsweise umfasst eine Backplatte oder eine Seite der Backplattenvorrichtung zwischen einem und 36 Backplattenbereichen und eine Backplattenvorrichtung zwischen einem und 72 Backplattenbereiche.

Die Temperatur des Backplattenbereichs kann mithilfe der Methode der gewichteten Residuen, beispielsweise finite-Volumen-Methoden oder Polynomansätze dargestellt bzw. bestimmt werden.

Gegebenenfalls erfolgt eine Referenztemperaturmessung. Die Messvorrichtung für die Referenztemperaturmessung kann beispielsweise ein gefedertes Blech mit einer aufgebogenen Vorderkante sein, auf welchem ein Thermoelement fixiert ist und das auf einer schwenkbaren Halterung montiert ist. Diese Vorrichtung kann beispielsweise vor dem Auftragsbereich oder im Auftragsbereich befestigt sein. Insbesondere kann diese Vorrichtung für die Messung an der oberen Backplatte eingerichtet sein. Eine zweite, idente oder ähnliche Vorrichtung kann für die Messung an der unteren Backplatte montiert sein. Die gefederte Ausführung ist aufgrund von möglichen Dampf- bzw. Ausbackleisten vorteilhaft, die das Blech zu überwinden hat. Die Schwenkbarkeit der Vorrichtung ist vorteilhaft, um einer Abrasion des Blechs entgegen zu wirken wenn während dem Backvorgang keine Referenztemperaturmessung stattfindet Gegebenenfalls findet eine Emissionsgradkorrektur statt. Durch den Abgleich von Modellrechnungen mit den Messdaten kann der Emissionsgrad jeder einzelnen Backplatte bzw. jedes Backplattenbereichs überwacht und bei Bedarf korrigiert werden. Beispielsweise kann sich die Emission der Wärmestrahlung einer Backplattenvorrichtung durch Verschmutzung oder Korrosion ändern. Die Aufnahme der Messdaten kann durch einen Temperatursensor erfolgen und die Berechnung kann durch die Steuerungseinheit vorgenommen werden. Diese Daten können zudem auch für eine vorausschauende Wartung verwendet werden, um Stillstandszeiten zu verringern.

Gegebenenfalls wird eine Leistungsmessung der Heizelemente bzw. des Heizelements durchgeführt. Werden, gemäß einer bevorzugten Ausführungsform, Induktoren als Heizelement verwendet, so sind diese in einem gewissen Abstand zu den Backplattenrückseiten angeordnet, um den erforderlichen Luftspalt einzustellen bzw. freizuhalten. Dies entspricht einer mechanischen Einstellung. Die mechanische Einstellung vereinfacht beispielsweise die Inbetriebnahme bzw. die Fehlersuche.

Zudem ist eine Nachjustierung durch Kontrolle per Strommessung möglich. Die Leistungsmessung kann auch für die Zustandsschätzung verwendet werden.

Gemäß einer bevorzugten Ausführungsform der Backvorrichtung bewegen sich die diskreten Backplatten bzw. Backplattenvorrichtungen an den Heizelementen mit örtlich konzentrierter Wärmeeinbringung vorbei und werden von diesen erwärmt. Die Heizelemente, vorzugsweise Induktoren, können von Ansteuergeräten, beispielsweise der Ansteuerelektronik der Induktoren, mit Leistung versorgt werden. Diese Ansteuergeräte wiederum erhalten von einem oder mehreren Steuergeräten eine oder mehrere Stellgrößen, z. B. die prozentuelle Heizleistung. Die Ansteuerelektronik und die Steuergeräte können Teile der Steuerungseinrichtung sein oder gegebenenfalls sind diese Komponenten Teile der Induktoren.

Bevorzugt sind Sensoren vorgesehen, die Messgrößen erfassen, wobei diese Messgrößen den Backplattenvorrichtungen oder deren Backplattenbereichen zugeordnet werden. Ein Algorithmus in der Steuerungseinrichtung berechnet daraus und gegebenenfalls aus anderen bekannten Größen wie Teigmenge, Soll-Temperatur etc., den Zeitverlauf der Stellgrößen, die notwendig sind, um das gewünschte Ergebnis wie beispielsweise Soll-Temperatur, Soll-Bräunung zu erreichen.

Die Heizelemente können, je nach Anforderungen des Produktes, an einer lokalen Stelle oder verteilt im Ofen angeordnet werden. Beispielsweise können mehrere Zonen, insbesondere drei Zonen, quer zur Bewegungsrichtung der Backplattenvorrichtung vorgesehen sein. Insbesondere bei Verwendung einer Kaskadenregelung mit der Temperatur als innere Regelgröße werden backplattenindividuelle Soll-Temperaturen von einem äußeren Regelkreis vorgegeben. Die Regelgröße des äußeren Regelkreises kann beispielsweise eine Produkteigenschaft wie die Restfeuchtigkeit oder der Bräunungsgrad des Produktes sein. Auch diese Messwerte bzw. Messsignale werden bevorzugt backplattenindividuell erfasst und einer Backplattenvorrichtung zugeordnet. Die Bräunungsgradmessung des Produktes ist neben der Temperaturmessung gegebenenfalls ein relevanter Indikator für die Regelung, beispielsweise ob einzelne Backplattenbereiche mit zusätzlicher Wärmeenergie zu beaufschlagen sind. Die Bräunungsgradmessung kann beispielsweise auf bestimmte Zonen am Produkt gerichtet sein, wobei ein bestimmter Bräunungsgrad, je nach Produkttyp, nicht unterschritten und/oder überschritten werden sollte.

Gegebenenfalls ist vorgesehen, dass bei der Steuerung oder Regelung der Heizleistung die Teigenthalpie berücksichtigt wird. Die Teigenthalpie in Abhängigkeit der Teigmenge kann zu einem gezielten Wärmeeintrag in die Backplatte beitragen. Dazu kann vorgesehen sein, dass an der Steuerungseinrichtung unterschiedliche Rezepturen von Backmassen hinterlegt sind oder werden. Insbesondere der Wassergehalt hat einen Einfluss auf die Enthalpie des Teiges. Die Regelung kann dann die Teigenthalpie aufgrund der hinterlegten Zutaten berücksichtigen und die nötige Energie als Störgröße berücksichtigen. Zudem kann eine gemessene Teigmenge anstatt des nominellen Wertes zur Ermittlung der nötigen Energie herangezogen werden, um hierdurch verursachten Temperaturunterschieden zwischen Backplatten entgegen zu wirken.

Gegebenenfalls ist vorgesehen, dass die Referenztemperaturmessung nicht ständig erfolgt, sondern nur während der Abkühlphase. Je gemessenem Backplattenbereich kann so ein Korrekturfaktor zugeordnet bzw. berechnet werden. Zuerst kann die Temperatur mittels des zur Regelung verwendeten Sensors und zeitgleich auch mit einem schwenkbaren Thermoelement gemessen werden. In weiterer Folge kann durch einen einfachen Zusammenhang ein Korrekturfaktor zwischen diesen beiden Messdaten bestimmt werden. Falls die Referenzmessung an der Backfläche anstatt an der Backplattenrückseite durchgeführt wird, ist der errechnete Korrekturfaktor gegebenenfalls ein Maß für die Umrechnung der Zwischengröße (Backplattenrückseitentemperatur) in die relevante Größe (Temperatur an der Backfläche).

Gegebenenfalls ist vorgesehen, dass durch eine Strommessung an einem induktiven Heizelement, gegebenenfalls in Kombination mit einer Spannungsmessung an der Ansteuerelektronik, die Leistung und damit der direkte Energieeintrag bestimmt werden. Gegebenenfalls findet die Strommessung bei der Einstellung der Luftspalte zwischen den Induktoren und der zu beheizenden Fläche Anwendung.

Gegebenenfalls ist vorgesehen, dass anstatt einer Zustandsregelung ein modellbasierter Entwurf und eine Umsetzung als FIR/IIR-Filter oder andere Zustandsraumdarstellungen erfolgt.

Gegebenenfalls sind Heizelemente mit verschiedenen Ausdehnungen bzw. Heizbereichen vorgesehen. Beispielsweise sind Heizelemente mit kurzer Ausdehnung in Bewegungsrichtung der Backplattenvorrichtungen bei größerer Ausdehnung quer dazu und/oder Heizelemente mit größerer Ausdehnung in Bewegungsrichtung der Backplattenvorrichtungen bei kleiner Ausdehnung quer dazu vorgesehen. Die Heizelemente mit größerer Ausdehnung in Bewegungsrichtung können beispielsweise zur Beheizung der gesamten Backplatten oder zur Beheizung von in Bewegungsrichtung verlaufender streifenförmiger Backplattenbereiche vorgesehen sein. Die Elemente mit kurzer Ausdehnung in Bewegungsrichtung können vorrangig zur individuellen Beheizung einzelner Backplatten oder zur Beheizung von quer verlaufenden streifenförmigen Backplattenbereichen vorgesehen sein. Je kleiner die Heizelemente bzw. deren Heizbereiche sind, desto kleiner können die individuell beheizbaren Backplattenbereiche gewählt werden.

Gegebenenfalls ist vorgesehen, dass die Heizleistung für jede Backplattenvorrichtung bzw. für jeden Backplattenbereich gesteuert wird und nicht geregelt.

In weitere Folge wird die Erfindung anhand von Figuren weiter beschrieben.

Fig. 1 zeigt eine schematische Schnittdarstellung einer möglichen Ausführungsform einer Backvorrichtung, insbesondere in einer Seitenansicht.

Fig. 2 zeigt eine schematische Schnittdarstellung von Komponenten einer Backvorrichtung, insbesondere in einer Aufsicht.

Fig. 3 zeigt eine schematische Schrägansicht einer möglichen Ausführungsform einer Backplattenvorrichtung.

Die Fig. 4a und 4b zeigen schematische Blockdiagramme von Steuerungen bzw. Regelungen der Steuerungseinrichtung.

Wenn nicht anders angegeben, so entsprechen die Bezugszeichen der Figuren folgenden Komponenten: Backplattenvorrichtung 1, obere Backplatte 2, untere Backplatte 3, Backstrecke 4, Heizelement 5, Steuerungseinrichtung 6, Backplattenbereich 7, Sensor 8, Endlosförderer 9, Backmassenauftragsbereich 10, Schließbereich 11, Backbereich 12, Öffenbereich 13, Entnahmebereich 14, Heizanordnung 15, Bewegungsrichtung 16, exogene Eingänge und/oder Störgrößen 17, individuelle Sollgrößen (z.B. Temperatur) der Backplattenvorrichtungen 18, Regelungsalgorithmus 19, Stellgrößen 20, Regelstrecke der Backvorrichtung 21, Produktstrom 22, Messgröße(n) 23, Produkteigenschaftsregler 24, Temperaturregler 25, Produkteigenschaft 26, Temperatur bzw. Heizleistung 27.

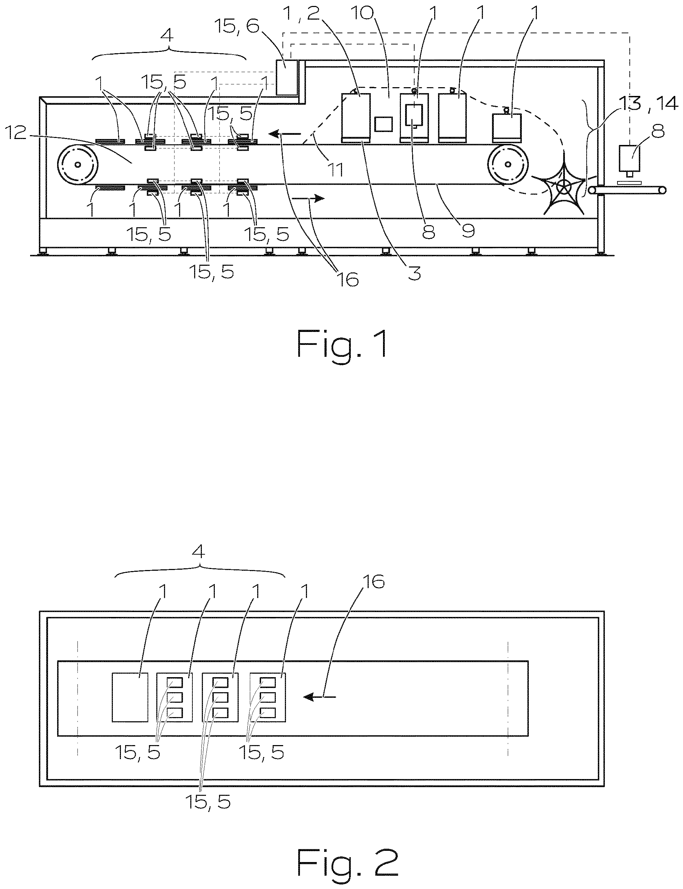

**Fig. 1** zeigt eine schematische Seitenansicht einer Backvorrichtung. Die Backvorrichtung umfasst mehrere Backplattenvorrichtungen 1, wobei nicht alle sondern nur einige Backplattenvorrichtungen 1 eingezeichnet sind. Bevorzugt sind die Backplattenvorrichtungen 1 eine nach der anderen an einem Endlosförderer 9 vorgesehen. Der Endlosförderer 9 ist beispielsweise ein Kettenförderer oder ein Riemenförderer, der die Backplattenvorrichtungen 1 durch die Backvorrichtung befördert. Insbesondere werden die Backplattenvorrichtungen 1 kontinuierlich durch die Backvorrichtung bewegt.

Die Backplattenvorrichtungen 1 umfassen in der vorliegenden Ausführungsform jeweils eine obere Backplatte 2 und eine untere Backplatte 3. Die Backplatten 2, 3 können beispielsweise scharnierartig miteinander verbunden sein, um, wie in dieser Ausführungsform, eine Backzange zu bilden. Die Backplattenvorrichtung 1 wird in einem Öffenbereich 13 geöffnet. In einem Entnahmebereich 14 werden die gebackenen Produkte bzw. Formkörper aus den Backplattenvorrichtungen 1 entnommen und aus der Backvorrichtung befördert. Die geöffneten Backplattenvorrichtungen 1 werden in einem Backmassenauftragsbereich 10 mit einer Backmasse beschickt. Insbesondere wird die Backmasse auf eine oder beide Backplatten 2, 3 aufgetragen. Dieser Auftrag der Backmasse oder des Teiges kann über eine herkömmliche Teigauftragsvorrichtung, wie beispielsweise über einen Teigaufgießer, erfolgen.

In weiterer Folge werden die Backplattenvorrichtungen 1 in einem Schließbereich 11 geschlossen und, je nach Gattung der Backmaschine, verriegelt. Die Verriegelung ermöglicht es in Kombination mit Dicht- bzw. Dampfleisten, dass die beiden Backplatten 2, 3 zusammen eine Überdruckbackform bilden.

Die geschlossene Backplattenvorrichtung 1 wird zum Backen der Produkte in weiterer Folge entlang einer Backstrecke 4 beheizt. Die Backstrecke 4 erstreckt sich durch einen Backbereich 12 der Backvorrichtung. Der Backbereich 12 ist beispielsweise der Backraum einer Backvorrichtung, der von einer Heizanordnung 15 beheizt wird. Insbesondere ist die Heizanordnung 15 dazu geeignet und/oder eingerichtet, die Backplattenvorrichtungen 1 bzw. deren Backplatten 2, 3 zu beheizen.

Der Backraum, also insbesondere der Backbereich 12, kann durch eine Vorkopfwand von den Bereichen 10, 11, 13 und 14 abgetrennt sein, wobei sich der Endlosförderer 9 mit den Backplattenvorrichtungen 1 durch Öffnungen dieser Vorkopfwand hindurch erstrecken kann. Alternativ kann diese Vorkopfwand entfallen, sodass auch in den vorgenannten Bereichen eine erhöhte Temperatur gegeben ist.

Die Heizanordnung 15 umfasst mehrere Heizelemente 5. In der vorliegenden Ausführungsform sind jeweils oberhalb und unterhalb der Backstrecke 4 bzw. der in der Backstrecke 4 befindlichen Backplattenvorrichtungen 1 je ein Heizelement 5 vorgesehen. Dadurch werden entlang der Backstrecke 4 jeweils die obere Backplatte 2 und die untere Backplatte 3 der einzelnen Backplattenvorrichtungen 1 beheizt.

Wie auch in der vorliegenden Ausführungsform der Backvorrichtung, ist es üblich, dass sich die Backstrecke 4 entlang einer oberen Transportebene bis zu einem Umlenkbereich und weiter entlang einer unteren Transportebene erstreckt. Beim Übergang von der oberen Transportebene zur unteren Transportebene werden die Backplattenvorrichtungen 1 bevorzugt um 180° verschwenkt. Werden Heizelemente 5 im Verlauf der oberen und der unteren Transportebene immer nur oberhalb oder immer nur unterhalb der Backstrecke 4 angeordnet, so werden bei einer derartigen Ausführungsform dennoch die obere Backplatte 2 und die untere Backplatte 3 beheizt, da beim hinteren Umlenkpunkt die Backplattenvorrichtungen 1 umgedreht werden. Die Backplatten 2, 3 werden entlang der Backstrecke 4 somit nacheinander beheizt. Im vorliegenden Beispiel der Backvorrichtung sind jedoch oberhalb und unterhalb der Backstrecke 4 Heizelemente 5 vorgesehen, und dies entlang der oberen Transportebene und/oder entlang der unteren Transportebene. Die Backplatten 2, 3 einer Backplattenvorrichtung 1 werden dadurch gleichzeitig von zwei Heizelementen 5 beheizt.

Die Heizelemente 5 sind bevorzugt derart ausgebildet, dass sie jeweils nur eine Backplattenvorrichtung 1 bzw. nur eine Backplatte 2, 3 beheizen. Gemäß einer bevorzugten Ausführungsform können die Heizelemente 5 derart ausgebildet sein, dass sie nur einen Bereich der Backplattenvorrichtungen 1 beheizen. Für diese Funktionalitäten ist es vorteilhaft, wenn die Heizelemente 5 einen verhältnismäßig kleinen Heizbereich aufweisen. Insbesondere erstreckt sich die Wirkung eines Heizelements 5 nicht über mehrere Backplattenvorrichtungen 1, sondern nur jeweils auf jene Backplattenvorrichtung 1, die im unmittelbaren Einflussbereich des jeweiligen Heizelements 5 liegt.

An der Backstrecke 4 können entlang der Bewegungsrichtung 16 der Backplattenvorrichtungen 1 mehrere Heizelemente 5 nacheinander angeordnet sein. Betrachtet man eine Backplattenvorrichtung 1, die durch den Endlosförderer 9 entlang der Backstrecke 4 und entlang der Bewegungsrichtung 16 bewegt wird, so wird diese Backplattenvorrichtung 1 dadurch nacheinander von mehreren Heizelementen 5 beheizt.

Die Heizleistung dieser Heizelemente 5 kann individuell eingestellt bzw. gesteuert bzw. geregelt werden. Hierzu ist eine Steuerungseinrichtung 6 vorgesehen. Zudem kann die Steuerungseinrichtung 6 mindestens einen Sensor 8 umfassen. In der vorliegenden Ausführungsform sind mehrere Sensoren 8 vorgesehen. Einer der Sensoren 8 ist in einem Bereich der Backvorrichtung vorgesehen, in dem die Backplattenvorrichtungen 1 geöffnet sind. Dadurch kann der Sensor 8, beispielsweise ein Temperatursensor, insbesondere ein pyrometrischer Sensor, Temperaturen an der Backformseite der Backplatten 2, 3 aufnehmen. Insbesondere können derartige Messsignale bzw. Sensordaten für beide Backplatten 2, 3 jeder Backplattenvorrichtung 1 aufgenommen werden. Die aufgenommenen Messsignale werden in der Steuerungseinrichtung 6 bevorzugt den jeweiligen Backplattenvorrichtungen 1 bzw. Backplatten 2, 3 zugeordnet. Dies hilft bei der individuellen Regelung bzw. Steuerung der Heizleistung für jede Backplattenvorrichtung 1. Alternativ kann der Sensor 8 auch Temperaturen der Backformrückseiten bzw der Außenfläche der geschlossenen Backplattenvorrichtungen 1 messen. Gegebenenfalls können zwei Sensoren 8 vorgesehen sein, die die Temperaturen an gegenüberliegenden Seiten der Backplattenvorrichtungen 1 messen. In allen Ausführungsformen kann vorgesehen sein, dass der Sensor 8 oder die Sensoren 8 die Temperaturen der Backplattenbereiche 7 messen und/oder dass Temperaturen den Backplattenbereichen 7 zugeordnet werden.

In der vorliegenden Ausführungsform ist auch ein Sensor 8 im Entnahmebereich 14 vorgesehen. Insbesondere ist der Sensor 8 in einem Bereich vorgesehen, in dem die gebackenen Produkte bzw. Formkörper aus der Backvorrichtung befördert werden. Dieser Sensor 8 kann beispielsweise ein optischer Sensor 8 zur Erkennung der Bräunung des Backproduktes sein. Alternativ können die Backprodukte bzw. die gebackenen Formkörper auch gewogen werden oder es kann die Restfeuchte bestimmt werden. Diese Sensordaten können in der Steuerungseinrichtung 6 einer bestimmten Backplattenvorrichtung 1 zugeordnet werden. Auch dies vereinfacht die individuelle Regelung bzw. Steuerung der Heizelemente 5 für jede Backplattenvorrichtung 1. Weisen beispielsweise die gebackenen Formkörper einer bestimmten Backplattenvorrichtung 1 einen stärkeren Bräunungsgrad bzw. eine geringere Restfeuchte auf als die gebackenen Formkörper der anderen Backplattenvorrichtungen 1, so kann für eben diese Backplattenvorrichtung 1 die Heizleistung reduziert werden. Ebenso kann die Heizleistung für eine bestimmte Backplattenvorrichtung 1 erhöht werden, wenn die Restfeuchte der in dieser Backplattenvorrichtung 1 gebackenen Formkörper zu hoch ist.

**Fig. 2** zeigt eine schematische Schnittdarstellung bzw. Aufsicht von maßgeblichen Komponenten einer Backvorrichtung, insbesondere der Backvorrichtung aus Fig. 2. In der Ansicht ist schematisch eingezeichnet, wie sich mehrere Backplattenvorrichtungen 1 entlang der Bewegungsrichtung 16 durch die Backstrecke 4 bewegen. Oberhalb der Backstrecke 4 sind mehrere Heizelemente 5 vorgesehen. In der vorliegenden Ausführungsform sind quer zur Bewegungsrichtung 16 der Backplattenvorrichtungen 1 mehrere Heizelemente 5 vorgesehen. Insbesondere sind bei der Darstellung jeweils drei Heizelemente 5 nebeneinander angeordnet. Während mindestens eines der Heizelemente 5 aufgrund seiner Positionierung dazu eingerichtet ist, die Backplattenvorrichtungen 1 im Mittenbereich zu erwärmen, sind die außenliegenden Heizelemente 5 dazu bestimmt, den Randbereich der Backplattenvorrichtungen 1 zu beheizen. Dies kann beispielsweise Vorteile mit sich bringen, wenn die Backmasse mittig auf die geöffneten Backplattenvorrichtungen 1 aufgetragen wird. So wird durch die Teigenthalpie besonders der Mittenbereich der Backplattenvorrichtung 1 gekühlt. Eine stärkere Beheizung des Mittenbereichs im Vergleich zum Außenbereich der Backplattenvorrichtungen bewirkt eine effiziente Beheizung, da die Backplatten 2, 3 auf die optimale Backtemperatur gebracht werden können, ohne den Randbereich, insbesondere mechanische Einrichtungen wie beispielsweise ein Scharnier oder eine Verriegelung, über die optimale Temperatur beheizen zu müssen. Dies ist beispielsweise positiv für den Bauteilschutz, da Lagerungen oder andere mechanische Komponenten weniger stark durch die Temperatur belastet werden.

In der vorliegenden Ausführungsform der Fig. 2 sind einerseits entlang der Bewegungsrichtung 16 mehrere Heizelemente 5 hintereinander vorgesehen, sodass die Backplattenvorrichtungen 1 nach der Reihe von mehreren Heizelementen 5 beheizt werden können. Zusätzlich sind bei dieser Ausführungsform jedoch auch mehrere Heizelemente 5 quer zur Bewegungsrichtung 16 nebeneinander angeordnet. Auch unterhalb der Backstrecke können mehrere Heizelemente 5 quer zur Bewegungsrichtung 16 nebeneinander angeordnet sein. Eine Anordnung der Fig. 2 kann auch beispielsweise in Fig. 1 vorgesehen sein. Grundsätzlich kann jede Konfiguration der Heizelemente 5 gewählt werden, die eine individuelle bzw. bereichsweise Beheizung der Backplattenvorrichtungen 1 entsprechend der vorliegenden Erfindung ermöglicht.

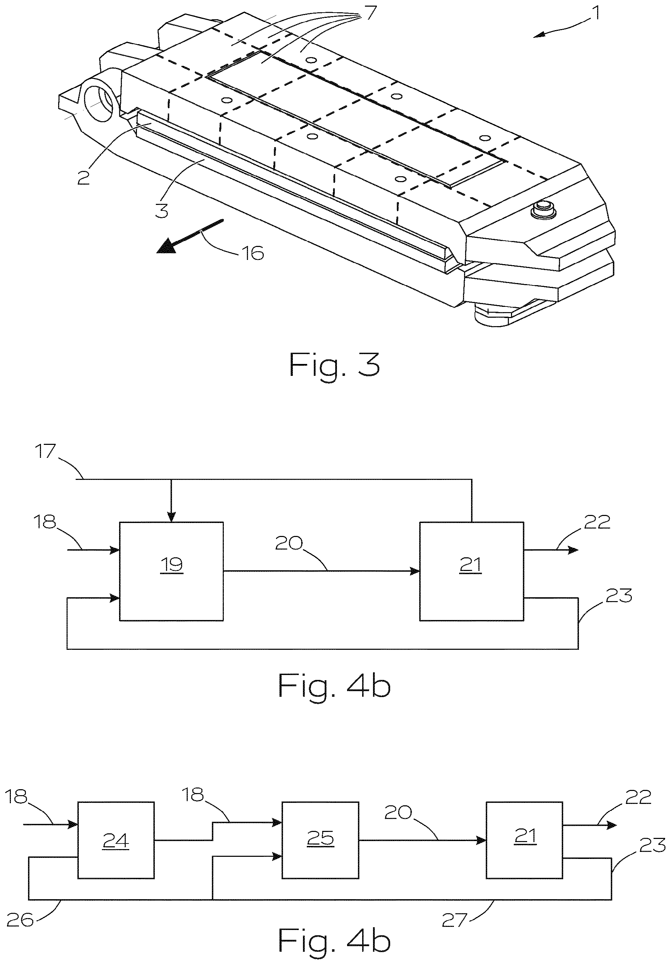

**Fig. 3** zeigt eine schematische Schrägansicht einer Ausführungsform einer Backplattenvorrichtung 1. Die Backplattenvorrichtung 1 umfasst eine obere Backplatte 2 und eine untere Backplatte 3. In der vorliegenden Ausführungsform sind die Backplatten 2, 3 jeweils von einem Rahmen gehalten. Grundsätzlich kann ein derartiger Rahmen jedoch auch entfallen, womit die Backplatten 2, 3 im Wesentlichen selbsttragend ausgebildet sind. Die Backplatten 2, 3 sind scharnierartig miteinander verbunden, wodurch eine Backzange gebildet wird. Grundsätzlich können die Backplattenvorrichtungen 1 auch herkömmliche Backplattenvorrichtungen üblicher gattungsgemäßer Backvorrichtungen sein.

An den Backplattenvorrichtungen 1 werden mehrere Backplattenbereiche 7 definiert. Diese Backplattenbereiche 7 sind in der vorliegenden Darstellung durch strichlierte Linien schematisch eingezeichnet. Durch die Anordnung mehrerer in ihrem Heizbereich begrenzter Heizelemente 5 können die einzelnen Backplattenbereiche 7 individuell beheizt werden. Zwar sind die Backplattenbereiche 7 in der Regel Teile ein und desselben Körpers einer Backplatte bzw. der Backplattenvorrichtung 1, sodass eine gewisse Wärmeleitung unvermeidbar ist, die Beheizung der Backplattenbereiche 7 soll aber individuell erfolgen.

Beispielsweise können bei einer Backvorrichtung für die Backplattenvorrichtung 1 der Fig. 3, quer zur Bewegungsrichtung 16 betrachtet, sechs Heizelemente 5 nebeneinander angeordnet sein, die jeweils dazu geeignet sind, eine streifenförmige Beheizung der Backplattenvorrichtung 1, bzw. einer Seite der Backplattenvorrichtung 1, vorzunehmen. Durch gezieltes Ändern der Heizleistung je nach Lage der Backplattenvorrichtung kann auch die Heizleistung der entlang der Bewegungsrichtung 16 angeordneten Backplattenbereiche 7 eingestellt werden. So kann beispielsweise anfänglich die Heizleistung eines Heizelements 5 reduziert werden, um den vorderen Randbereich weniger zu beheizen. Bewegt sich die Backplattenvorrichtung 1 weiter, so kann die Heizleistung des Heizelements 5 gesteigert werden um den Mittenbereich der Backplattenvorrichtung 1 stärker zu beheizen. In weiterer Folge kann die Heizleistung wieder reduziert werden, um den gegenüber liegenden Randbereich der Backplattenvorrichtung 1 weniger zu beheizen. Durch eine derartige Steuerung und/oder Regelung der Heizleistung der Heizelemente 5 kann beispielsweise der Mittenbereich der Backplattenvorrichtung 1 stärker beheizt werden als deren Randbereich. Ebenso können die quer zur Bewegungsrichtung 16 gesehenen äußeren Heizelemente 5 mit weniger Heizleistung betrieben werden als die mittig angeordneten Heizelemente 5, sodass im Bereich des Scharniers bzw. im Bereich der Verriegelung eine geringere Beheizung erfolgt und diese Bauteile geschützt werden können. Ein derartiger Temperaturverlauf kann bevorzugt für jede Backplattenvorrichtung individuell eingestellt werden.

Es ist vorteilhaft, wenn die Heizelemente 5 als induktive Heizelemente 5 ausgebildet sind, die die Backplatten 2, 3 induktiv beheizen. Hierfür ist es vorteilhaft, wenn die Backplatten 2, 3, wie in Fig. 3 dargestellt, im Wesentlichen glatte bzw. optimiert geformte Rückenflächen aufweisen, sodass der Luftspalt zwischen dem Induktor und der zu beheizenden Backplatte 2, 3 konstant oder genau gewählt werden kann. Grundsätzlich kann durch die zeitliche Steuerung bzw. Regelung der Heizleistung der Heizelemente 5 auch eine Änderung des Luftspaltes berücksichtigt werden.

Die Signalflüsse und Abhängigkeiten im Automatisierungssystem bzw. der Steuerungseinrichtung 6 sind in Form von Blockdiagrammen in **Fig. 4a** und **Fig. 4b** dargestellt. Insbesondere umfassen diese folgende Elemente: exogene Eingänge und/oder Störgrößen 17, individuelle Sollgrößen (z.B. Temperatur) der Backplattenvorrichtungen 18, Regelungsalgorithmus 19, Stellgrößen 20, Regelstrecke der Backvorrichtung 21, Produktstrom 22, Messgröße(n) 23, Produkteigenschaftsregler 24, Temperaturregler 25, Produkteigenschaft 26, Temperatur bzw. Heizleistung 27.

Die individuellen Sollgrößen 18 je Backplatte 2,3 oder Backplattenvorrichtung 1 können z.B. die Produktqualität wie Bräunung, Restfeuchtigkeit oder die Backplattentemperatur betreffen. In der Praxis können diese Sollgrößen 18 für alle Backplatten 2,3 bzw. Backplattenvorrichtungen 1 meist gleich oder ähnlich gewählt werden, damit einheitliche Produkte gebacken werden. Werden beispielsweise keine Messgrößen 23 für die Berechnung der Stellgrößen 20 verwendet, handelt es sich um eine Steuerung, andernfalls um eine Regelung.

Die Steuerungseinrichtung 6 ermöglicht es, die Heizleistung und damit die über einen Umlauf eingebrachte Energie in einzelnen Backplatten 2, 3 und/oder Backplattenvorrichtungen 1 individuell einzustellen. Durch die eindeutige Zuordnung der Messgrößen 23 zu den Backplatten 2, 3 oder Backplattenvorrichtungen 1, ist es mit einer geeigneten Steuerungs- oder Regelungsstrategie möglich, Qualitätsinhomogenitäten der Produkte zu vermeiden. Zusätzlich können die durch Störungen entstandenen Inhomogenitäten aktiv ausgeregelt werden.

Auf geeigneten Heizelementen 5 aufbauend wird gegebenenfalls ein Regelungskonzept verwendet, das auf Basis von Benutzereingaben und Messungen die Stellgrößen 20 so wählt, dass für jede Backplatte 2, 3 die Abweichung der Regelgröße vom individuellen.Sollwert 18 minimal wird. Für den üblichen Fall, dass alle Sollwerte 18 gleich gewählt werden, bedeutet das eine größtmögliche Homogenität, beispielsweise der Backplattentemperaturen oder einer Eigenschaft wie der Bräunung der Produkte.

Wie in Abbildung Fig. 4a dargestellt, erlaubt die gewählte modellbasierte Steuerungs- oder Regelungsstrategie 19, exogene Eingänge 17 (z.B. die Teigaufgussmenge) sowie bekannte Störgrößen 17 direkt zu berücksichtigen. Dadurch können potenziell negative Einflüsse auf die Produktqualität oder -homogenität kompensiert werden, bevor sie in den Messgrößen 23 sichtbar werden. Für eine backplattenindividuelle Regelung sind individuelle Messungen je Backplatte vorteilhaft oder notwendig.

Zur backplattenindividuellen Regelung einer Produkteigenschaft, wie beispielsweise des Bräunungsgrads oder der Restfeuchtigkeit, kann eine kaskadierte Regelung verwendet werden, wie sie in Fig. 4b abgebildet ist.

Hierbei wird von einem überlagerten Regler die individuelle Solltemperatur 18 jeder Backplatte 2, 3 oder Backplattenvorrichtung 1 angepasst, um die gewünschte Produktqualität an der entsprechenden Backplattenvorrichtung 1 sicherzustellen.

Die Rückführgrößen des überlagerten Reglers 24 sind dann beispielsweise gemessene Bräunungsgrade oder Restfeuchtigkeiten und dazugehörige Backplattennummern, während seine Stellgrößen 20 vorzugsweise die individuellen Solltemperaturen aller Backplattenvorrichtungen oder deren Backplattenbereiche sind. Der unterlagerte Temperaturregler 25 gibt in weiterer Folge die Stellgrößen 20 der Heizelemente 5 so vor, dass die Abweichung der Backplattentemperaturen von ihren individuellen Sollwerten 18 minimal wird.

## Patentansprüche

1. **Backvorrichtung** zum Herstellen gebackener, bevorzugt essbarer, Produkte,
- wobei mehrere öffenbare und schließbare Backplattenvorrichtungen (1) vorgesehen sind,
- wobei die Backplattenvorrichtungen (1) jeweils zwei Backplatten (2,3) und eine zwischen den geschlossenen Backplatten (2,3) gebildete Backform für eine Backmasse aufweisen,
- wobei die Backplattenvorrichtungen (1) aneinandergereiht entlang einer Bewegungsrichtung (16) durch eine Backstrecke (4) befördert werden,
- wobei jede Backplattenvorrichtung (1) mehrere entlang ihrer Erstreckung angenommene Backplattenbereiche (7) aufweist,
- wobei eine Heizanordnung (15) mit mehreren im Verlauf der Backstrecke (4) angeordneten Heizelementen (5) vorgesehen ist,
- wobei die Heizanordnung (15) die Backplattenvorrichtungen (1) beim Durchlaufen der Backstrecke (4) zum Backen der Backmasse in der Backform beheizt,
- wobei die Heizanordnung (15) eine Steuerungseinrichtung (6) zum Steuern und/oder Regeln der an die Backplattenvorrichtungen (1) abgegebenen Heizleistung aufweist,
- wobei die Heizelemente (5) quer zur Bewegungsrichtung (16) an unterschiedlichen Positionen und insbesondere nebeneinander angeordnet sind und quer zur Bewegungsrichtung (16) nebeneinander angeordnete Backplattenbereiche (7) individuell beheizen,
**dadurch gekennzeichnet,**
**dass** die Steuerungseinrichtung (6) die Heizleistung für die jeweiligen Backplattenbereiche (7) der Backplattenvorrichtungen (1) individuell steuert oder regelt.

2. Backvorrichtung nach Anspruch 1, **dadurch gekennzeichnet, dass** die Heizanordnung (15) derart ausgebildet ist, dass die Heizleistung für die Backplattenbereiche (7) der Backplattenvorrichtungen (1) im Wesentlichen individuell einstellbar und veränderbar sind.

3. Backvorrichtung nach einem der Ansprüche 1 oder 2, **dadurch gekennzeichnet, dass** die Heizelemente (5) die vorbeifahrenden Backplattenvorrichtungen (1), und insbesondere deren Backplattenbereiche (7), eine(n) nach der/dem anderen, insbesondere einzeln, beheizt.

4. Backvorrichtung nach einem der Ansprüche 1 bis 3, **dadurch gekennzeichnet, dass** die Heizelemente (5) jeweils nur einen oder mehrere Backplattenbereich(e) (7) einer Backplattenvorrichtung (1) beheizen aber nicht die gesamte dem Heizelement (5) zugewandte Seite der Backplattenvorrichtung (1).

5. Backvorrichtung nach einem der Ansprüche 1 bis 4, **dadurch gekennzeichnet,**
- **dass** die Heizanordnung (15) mehrere Heizelemente (5) aufweist, die entlang der Bewegungsrichtung (16) nacheinander angeordnet sind,
- und **dass** diese Heizelemente (5) entlang der Bewegungsrichtung (16) nacheinander angeordnete Backplattenvorrichtungen (1) und/oder Backplattenbereiche (7) individuell beheizen.

6. Backvorrichtung nach einem der Ansprüche 1 bis 5, **dadurch gekennzeichnet, dass** die Steuerungseinrichtung (6) mindestens einen Sensor (8) umfasst, der Parameter des Backprozesses aufnimmt und dessen Sensorsignal eine Eingangsgröße für die von der Steuerungseinrichtung (6) durchgeführte Steuerung oder Regelung der Heizleistung ist.

7. Backvorrichtung nach Anspruch 6, **dadurch gekennzeichnet, dass** die vom Sensor (8) aufgenommenen Parameter in der Steuerungseinrichtung (6) dem jeweiligen Backplattenbereich (7) zugeordnet sind.

8. Backvorrichtung nach einem der vorangegangenen Ansprüche, umfassend einen Endlosförderer (9), der die Backplattenvorrichtungen (1) aneinandergereiht kontinuierlich nacheinander:
- durch einen Backmassenauftragsbereich (10) zum Einbringen einer Backmasse in die geöffneten Backplattenvorrichtungen (1),
- durch einen Schließbereich (11) zum Schließen und gegebenenfalls Verriegeln der Backplattenvorrichtungen (1),
- durch einen von der Heizanordnung (15) beheizten Backbereich (12) zum Backen der in den Backplattenvorrichtungen (1) angeordneten Backmasse entlang der Backstrecke (4),
- durch einen Öffenbereich (13) zum Öffnen der Backplattenvorrichtungen (1),
- und durch einen Entnahmebereich (14) zum Entnehmen der aus der Backmasse gebackenen Formkörper befördert.

9. Backvorrichtung nach einem der vorangegangenen Ansprüche, **dadurch gekennzeichnet, dass** die Heizelemente (5) Induktionsheizelemente zur induktiven, insbesondere berührungslosen, Beheizung der Backplattenvorrichtungen (1) und/oder deren Backplattenbereiche (7) sind.

10. **Verfahren** zum Herstellen gebackener, bevorzugt essbarer, Produkte, insbesondere auf einer Backvorrichtung nach einem der vorangegangenen Ansprüche,
- wobei mehrere öffenbare und schließbare Backplattenvorrichtungen (1) aneinandergereiht entlang einer Bewegungsrichtung (16) durch eine Backstrecke (4) befördert werden,
- wobei die Backplattenvorrichtungen (1) jeweils zwei Backplatten (2, 3) und eine zwischen den geschlossenen Backplatten (2, 3) gebildete Backform für eine Backmasse aufweisen,
- wobei jede Backplattenvorrichtung (1) mehrere entlang ihrer Erstreckung angenommene Backplattenbereiche (7) aufweist,
- wobei eine Heizanordnung (15) mit mehreren im Verlauf der Backstrecke (4) angeordneten Heizelementen (5) vorgesehen ist,
- wobei die Heizanordnung (15) die Backplattenvorrichtungen (1) beim Durchlaufen der Backstrecke (4) zum Backen der Backmasse in der Backform beheizt,
- wobei eine Steuerungseinrichtung (6) der Heizanordnung (15) die an die Backplattenvorrichtungen (1) abgegebene Heizleistung steuert und/oder regelt,
- wobei die Heizelemente (5) quer zur Bewegungsrichtung (16) an unterschiedlichen Positionen und insbesondere nebeneinander angeordnet sind und quer zur Bewegungsrichtung (16) nebeneinander angeordnete Backplattenbereiche (7) individuell beheizen,
**dadurch gekennzeichnet,**
**dass** die Steuerungseinrichtung (6) die Heizleistung für die jeweiligen Backplattenbereiche (7) der Backplattenvorrichtungen (1) individuell steuert oder regelt.

11. Verfahren nach Anspruch 10, **dadurch gekennzeichnet,**
**dass** die Heizleistung für die Backplattenbereiche (7) der Backplattenvorrichtungen (1) individuell eingestellt und verändert wird.

12. Verfahren nach einem der Ansprüche 10 oder 11, **dadurch gekennzeichnet,**
- **dass** die Heizelemente (5) die vorbeifahrenden Backplattenvorrichtungen (1) eine nach der anderen, insbesondere einzeln, beheizen,
- und/oder dass die Heizelemente (5) jeweils nur einen oder mehrere Backplattenbereiche (7) aber nicht die gesamte dem Heizelement (5) zugewandte Seite der Backplattenvorrichtung (1) beheizen.

13. Verfahren nach einem der Ansprüche 10 bis 12, **dadurch gekennzeichnet,**
- **dass** Parameter des Backprozesses aufgenommen werden,
- und **dass** diese Parameter Eingangsgrößen für die von der Steuerungseinrichtung (6) durchgeführte Steuerung oder Regelung der Heizleistung sind.

14. Verfahren nach Anspruch 13 **dadurch gekennzeichnet, dass** die aufgenommenen Parameter der jeweiligen Backplattenvorrichtung (1) und/oder dem jeweiligen Backplattenbereich (7) zugeordnet werden.

15. Verfahren nach Anspruch 13 oder 14, **dadurch gekennzeichnet, dass** einer oder mehrere der folgenden Parameter aufgenommen werden:
- Temperatur einer bestimmten Backplattenvorrichtung (18),
- Temperaturen mehrerer oder aller Backplattenvorrichtungen (18),
- Temperatur eines Backplattenbereichs (7) einer bestimmten Backplattenvorrichtung (1),
- Temperaturen mehrerer oder aller Backplattenbereiche (7) einer Backplattenvorrichtung (1),
- Temperaturen mehrerer oder aller Backplattenbereiche (7) mehrerer oder aller Backplattenvorrichtungen (1),
- Produktparameter von gebackenen Produkten, wie beispielsweise Restfeuchte nach dem Backen oder Bräunungsgrad nach dem Backen.
